# EUROPÄISCHE PATENTSCHRIFT

(11) **EP 0 732 983 B1**
(45) Veröffentlichungstag und Bekanntmachung des Hinweises auf die Patenterteilung: **29.12.1997**
(21) Anmeldenummer: 94924844.7
(22) Anmeldetag: 04.08.1994
(51) Int. Cl.: B23K 35/36, B23K 35/14, A47J 36/02

(54) **VERFAHREN UND LOTPASTE ZUM AUFLÖTEN GROSSFLÄCHIGER PLATINEN AUS ALUMINIUM ODER ALUMINIUM-LEGIERUNGEN SOWIE ANWENDUNG DES VERFAHRENS**
METHOD AND PASTE FOR SOLDERING LARGE-AREA ALUMINIUM OR ALUMINIUM-ALLOY PLATES, AND IMPLEMENTATION OF THIS METHOD
PROCEDE ET PATE A SOUDER POUR LE SOUDAGE DE GRANDES PLAQUES EN ALUMINIUM OU EN ALLIAGE D'ALUMINIUM, ET APPLICATION DE CE PROCEDE

(30) Priorität: 19.11.1993 DE 4339498
(43) Veröffentlichungstag der Anmeldung: 25.09.1996
(73) Patentinhaber: CASTOLIN S.A., CH-1025 Lausanne - St. Sulpice (CH)
(72) Erfinder: DUDEL, Klaus, CH-1025 St. Sulpice (CH)
(74) Vertreter: Hiebsch, Gerhard F., Dipl.-Ing.
(86) Internationale Anmeldenummer: EP9402581
(87) Internationale Veröffentlichungsnummer: WO9513902

(56) Entgegenhaltungen:
- EP-A- 0 512 489
- WO-A-82/02014
- FR-A- 2 193 676
- US-A- 4 151 016
- US-A- 4 981 526
- US-A- 5 226 974

## Beschreibung

Die Erfindung betrifft ein Verfahren zum Herstellen großflächiger Platinen aus Aluminium oder Aluminium-Legierungen zu deren Festlegung an einem aus einer Eisen-Basis-Legierung bestehenden Werkstück nach dem Oberbegriff des Patentanspruches 1. Außerdem erfaßt die Erfindung eine zur Durchführung des Verfahrens geeignete Lotpaste sowie eine Anwendung des Verfahrens.

Großflächige Lötungen zwischen einer Aluminium- oder Aluminiumlegierungsplatine und einer Bodenfläche eines Kochtopfes aus Inox -- nämlich nicht rostendem Edelstahl 18/8 Mo -- sind seit langer Zeit bekannt. Bei diesen Verfahren wird in den meisten Fällen das Flußmittel-Lotpulver-Gemisch oder die daraus bestehende Paste auf die zu lötende Fläche aufgestäubt, aufgestrichen oder aufgespritzt sowie dann in die Lötanlage eingesetzt und gelötet.

Bei allen nach diesen bekannten Verfahren aufgebrachten Flußmittel-Lotschichten ist die Stabilität in Hinsicht auf Abrieb und Lagerbeständigkeit sehr gering, wodurch Beschädigungen an der Flußmittel-Lotschicht auftreten, die zu Fehlern in der Lötung, zu nicht gelöteten Stellen oder eingeschlossenen Flußmittelresten führen.

Die WO-A-82/02014 der Anmelderin beschreibt ein Verfahren zum Auflöten einer Aluminiumplatte auf den Boden eines Kochtopfes aus rostfreiem Stahl. Das verwendete pulverige Lötmaterial besteht aus einem Flußmittel mit 53 bis 55 % Aluminiumfluorid und 45 bis 47 % -- Wasser aufnehmendem -- Kaliumfluorid und aus einem Lotpulver aus einer Al-Si-Legierung mit 10 bis 12 Gew.-% S. Dieses Pulvergemisch wird durch elektrostatisches Aufspritzen oder mittels Aufstäuben durch ein Sieb aufgebracht. Das Flußmittelgemisch wird zur Erzeugung einer besseren Homogenität angefeuchtet und zu einer Paste aufgerührt. Danach wird diese bei 195° C getrocknet und anschließend zu einem homogenen Pulver gemahlen.

Die ebenfalls von der Anmelderin stammende FR-A 2 193676 behandelt einen mit --beispielsweise Silberlot und Borverbindungen enthaltendem -- Flußmittel umhüllten Stab, ein Formteil oder eine Paste und offenbart als Binder ein Methacrylat. Ein Hinweis zur Verwendung desselben bei Aluminiumloten und den dazu notwendigen Flußmitteln ist nicht zu finden.

Eine Lotpaste mit einer Aluminiumlotlegierung, einem Flußmittel und ein Harzbinder auf Acrylbasis zum Löten von Werkstücken aus Aluminium-Legierungen komplizierter Formgebung ist der US-A-4981526 zu entnehmen. Das Acrylharz wird hier verwendet, da es rückstandslos sublimiert und die Klebeneigung beim Aufbringen verbessert. Die aus der Paste hergestellte Schicht wird nicht ausgehärtet.

In Kenntnis dieses Standes der Technik hat sich der Erfinder das Ziel gesetzt, die erkannten Mängel zu beseitigen und das Verfahren der eingangs genannten Art insbesondere zur Herstellung lötbarer Platinen, die vorgefertigt und dann einem Befestigungsvorgang zugeführt werden, bezüglich des Lötvorganges und der Lager- bzw. Transportfähigkeit zu verbessern. Auch soll die Stabilität der Flußmittel-Lotschicht im Hinblick auf Abrieb und Lagerbeständigkeit verbessert werden.

Zur Lösung dieser Aufgabe führt die Lehre nach den unabhängigen Patentansprüchen. Die Unteransprüche geben günstige Weiterbildungen an.

Erfindungsgemäß wird die Platine mit einer Lotpaste aus einem Flußmittel mit jeweils etwa hälftigem Anteil an Kaliumfluorid (KF) und Aluminiumfluorid (AlF₃), zum anderen aus einem Lötpulver mit etwa 80 bis 90 % Aluminium und 20 bis 10% Silizium sowie einem Binder aus einem Monopropylenglycol, 10 bis 30 Gew.-% -- bevorzugt 20 bis 25 Gew.-% -- einer Lösung aus Butylmethacrylat sowie einem Gemisch aus aliphatischen und naphterischen Kohlenwasserstoffen (C₇ bis C₉) - wobei der Anteil des Binders zwischen 0,2 und 2 Gew.-%, bevorzugt 0,3 bis 1,2 Gew.-% liegt. Dann wird das Werkstück, nämlich die beschichtete Platine getrocknet und ausgelagert, um einem gegebenenfalls ortsfernen Lötvorgang zugeführt werden zu können.

Der Anteil des Flußmittels soll bevorzugt zwischen 40 und 60 Gew.-% liegen, der des Lotpulvers zwischen 60 und 40 Gew.-%.

Im übrigen wird der Anteil des Monopropylenglycols der Lotpaste zugemischt, nicht aber der Lösung

Durch die harzartige Butylmethacrylat lösung wird die Bindung der einzelnen Partikel untereinander und mit der Oberfläche der Aluminiumplatine wesentlich verbessert sowie deren Lager- und Versandfähigkeit erhöht.

Je nach Wahl der Art des Spritzvorganges zum Aufbringen in einem oder in zwei Arbeitsgängen wird das Butylmethacrylat in verschiedenen Lösungsmitteln gelöst.

Wird die Schicht auf die Aluminiumplatine in zwei Arbeitsgängen aufgebracht, so besteht die zuerst aufgespritzte Paste aus Flußmittel, Lot und Monopropylenglycol. Die dann -- im zweiten Arbeitsgang -- aufgespritzte Lösung wird mit 10 bis 30 Gew.-%, vorzugsweise 20 bis 25 Gew.-%, Butylmethacrylat -- gelöst in aliphatischen und naphthenischen Kohlenwasserstoffen -- aufgesprüht. Durch den sich dabei ausbildenden sehr dünnen Harzfilm werden aufgabengemäß Lagerbeständigkeit und Versandfähigkeit erhöht.

Soll die Schicht in einem Arbeitsgang aufgebracht werden, wird die Butylmethacrylatlösung im selben Verhältnis -- nur mit einem anderen Lösungsmittel - - hergestellt und der Paste vor dem Aufspritzen zugemischt.

Als Lösungsmittel für das Butylmethacrylat werden in diesem Falle -- als Gemisch oder jeweils einzeln -- Glycoläther, Glycolester oder Ketone eingesetzt, in sehr geringem Maß auch Glycolätheracetate, bevorzugt in einer flüßenordnung von höchstem 5,0 Gew.-%.

Bei Verwendung dieser Paste in einem Arbeitsgang werden die gleichen Eigenschaften für die Beschichtung erreicht wie bei der in zwei Arbeitsgängen hergestellten Beschichtung.

Bei den Untersuchungen wurde auch gefunden, daß die erfindungsgemäßen harzähnlichen Zusätze keine störenden Einflüsse auf den Lötvorgang haben.

Weitere Vorteile, Merkmale und Einzelheiten ergeben sich aus der nachstehenden Beschreibung vorteilhafter Ausführungsbeispiele.

### Beispiel 1

Zur Verbesserung der Übertragung der Wärme in einen Kochtopf aus Inox sollten auf den Boden desselben eine Aluminiumplatte aufgelötet werden.

Auf die vorbereitete, zu lötende Oberfläche der Aluminiumplatine wurde mit einer Farbspritzpistole die aus Flußmittel, Lot und Monopropylenglycol nach Anspruch 7 und 9 bestehende Paste aufgespritzt. Nach dem Trocknen wurde auf diese Schicht mit der gleichen Spritzpistole eine dünne Schicht der 20 bis 25 Gew.-%tigen Butylmethacrylatlösung aufgespritzt und dann anschließend getrocknet.

Die so hergestellte und beschichtete Platine wurde nun gelagert und nach einer Lagerzeit von 3 bis 4 Tagen zur Lötpresse zwecks Durchführung der Lötung transportiert.

Bei der Kontrolle vor der Lötung konnten keine Fehler wie Abplatzen oder Abrieb in der Lötpastenbeschichtung festgestellt werden. Auch die gelöteten Kochtöpfe zeigten keine Fehler.

### Beispiel 2

In Unterschied zur Vorgehensweise nach Beispiel 1 wurde die Butylmethacrylatlösung in die Flußmittel-Lot-Paste eingemischt.

Zur Kontrolle der Transportbeständigkeit wurde eine Kiste mit beschichteten Aluminiumplatinen über mehrere Stunden in einem Lastwagen zur Kontrolle der Transportfähigkeit transportiert.

Bei der danach durchgeführten Kontrolle konnten keine Beschädigungen durch den Transport festgestellt werden. Auch hier konnten nach dem Lötvorgang keine Fehler an den gelöteten Töpfen gefunden werden.

## Patentansprüche

1. Verfahren zum Herstellen großflächiger Platinen aus Aluminium oder Aluminium-Legierungen zu deren Festlegung an einem aus einer Eisen-Basis-Legierung bestehenden Werkstück, beispielsweise einer gut wärmeleitenden Aluminiumplatte auf dem Boden eines Kochtopfes, aus nicht rostendem Edelstahl unter Einsatz eines Aluminium und Silizium enthaltenden Pulvers sowie eines Flußmittels mit Kalium- und Aluminiumfluorid,
dadurch gekennzeichnet,
daß die Platine mit einer Lotpaste aus Flußmittel mit etwa 50 % Kaliumfluorid und etwa 50 % Aluminiumflourid, einem Lotpulver mit etwa 80 bis 90 % Aluminium und 20 bis 10 % Silizium sowie einem Binder aus einem Monopropylenglycol und 10 bis 30 Gew.-% einer Losung aus Butylmethacrylat in Glycoläther, Glycolester, Ketone, jeweils einzeln oder als gemisch, versehen wird, wobei der Anteil des Binders zwischen 0,2 und 2 Gew.-% liegt, wonach die beschichtete Platine getrocknet und ausgelagert wird.

2. Verfahren zum Herstellen großflächiger Platinen aus Aluminium oder Aluminium-Legierungen zu deren Festlegung an einem aus einer Eisen-Basis-Legierung bestehenden Werkstück, beispielsweise einer gut wärmeleitenden Aluminiumplatte auf dem Boden eines Kochtopfes, aus nicht rostendem Edelstahl unter Einsatz eines Aluminium und Silizium enthaltenden Pulvers sowie eines Flußmittels mit Kalium- und Aluminiumfluorid,
dadurch gekennzeichnet,
daß die Platine mit einer Lotpaste aus Flußmittel mit etwa 50 % Kaliumfluorid und etwa 50 % Aluminiumflourid, einem Lotpulver mit etwa 80 bis 90 % Aluminium und 20 bis 10 % Silizium sowie einem Binder aus einem Monopropylenglycol und 10 bis 30 Gew.-% einer Lösung aus Butylmethacrylat in einem Gemisch aus aliphatischen und naphthenischen Kohlenwasserstoffen (C₇ bis C₉) versehen wird, wobei der Anteil des Binders zwischen 0,2 und 2 Gew.-% liegt, wonach die beschichtete Platine getrocknet und ausgelagert wird.

3. Verfahren nach Anspruch 2, dadurch gekennzeichnet daß die mit einer Spritzpistole auf die Platine aufgespritzte Lotpaste anschließend durch Aufspritzen der Binderlösung in einem zweiten Arbeitsgang fixiert wird.

4. Verfahren nach Anspruch 1, dadurch gekennzeichnet, daß dem Binder Zusätze bis höchstens 5,0 Gew.-% von Glycolätheracetaten zingesetzt werden.

5. Verfahren nach einem der Ansprüche 1 bis 4, gekennzeichnet durch einen Anteil des Flußmittels zwischen 40 und 60 Gew.-%, des Lotpulvers zwischen 60 und 40 Gew.-% und/oder des Binders zwischen 0,3 und 1,2 Gew.-% und/oder gekennzeichnet durch einen Binder mit 20 bis 25 Gew.-% der Lösung aus Butylmethacrylat.

6. Verfahren nach einem der Ansprüche 1 bis 5, dadurch gekennzeichnet, daß der Anteil der Monopropylenglycols der Lotpaste zugemischt wird und/oder, daß die Lotpaste mit einer Spritzpistole auf die Platine aufgespritzt wird.

7. Lotpaste zur Durchführung des Verfahrens zum Herstellen großflächiger Platinen aus Aluminium oder Aluminium-Legierungen zu deren Festlegen an einem aus einer Eisen-Basis-Legierung bestehenden Werkstück nach wenigstens einem der voraufgehenden Ansprüche, dadurch gekennzeichnet, daß die Lotpaste aus einem etwa 50 % Kaliumfluorid und etwa 50 % Aluminiumfluorid enthaltenden Flußmittel, einem Lotpulver mit etwa 80 bis 90 % Aluminium und 20 bis 10 % Silizium sowie einem Binder zusammengesetzt ist, der aus einem Monopropylenglycol sowie 10 bis 30 Gew.-% einer Lösung aus Butylmethacrylat in Glycoläther und/oder Glycolester und/oder Ketonen und gegebenenfalls Glycolätheracetaten oder in einem Gemisch aus aliphatischen oder naphthenischen Kohlenwasserstoffen (C₇ bis C₉) besteht und dessen Anteil zwischen 0,2 und 2 Gew.-%, vorzugsweise 0,3 bis 1,2 Gew.-% Liegt.

8. Lotpaste nach Anspruch 7, gekennzeichnet durch einen Anteil des Flußmittels zwischen 40 und 60 Gew.-% und/oder des Lotpulvers zwischen 60 und 40 Gew.-%.

9. Lotpaste nach Anspruch 7, dadurch gekennzeichnet, daß der Binder ein in Glycoläther und/oder Glycolester gelöstes Butylmethacrylat aufweist oder ein in Ketonen und/oder Glycoläther gelöstes Butylmethacrylat.

10. Lotpaste nach Anspruch 7, dadurch gekennzeichnet, daß der Binder ein in Glycolester und/oder Ketonen gelöstes Butylmethacrylat aufweist.

11. Lotpaste nach Anspruch 7, dadurch gekennzeichnet, daß der Binder ein in Glycoläther, Glycolätheracetaten, Glycolester und Ketonen gelöstes Butylmethacrylat aufweist.

12. Lotpaste nach einem der Ansprüche 7 bis 11, dadurch gekennzeichnet, daß der Anteil der Butylmethacrylatlösung im Binder zwischen 20 und 25 Gew.-%, liegt.

13. Anwendung des Verfahrens nach wenigstens einem der Ansprüche 1 bis 6 bzw. der Lotpaste nach wenigstens einem der Ansprüche 7 bis 12, zum Aufbringen einer gut wärmeleitenden Aluminiumplatte auf einen Kochtopf aus nichtrostendem Edelstahl.

14. Anwendung des Verfahrens nach wenigstens einem der Ansprüche 1 bis 6 bzw. der Lotpaste nach wenigstens einem der Ansprüche 7 bis 12, zum Herstellen einer versandfähigen Aluminiumplatine für Kochtöpfe aus nichtrostendem Edelstahl.

## Claims

1. Method for the production of large-area aluminium or aluminium-alloy plates to be fixed to an iron-alloy workpiece, e.g. a highly heat-conductive aluminium plate on the bottom of a stainless steel saucepan, using a powder containing aluminium and silicon and a flux containing potassium fluoride and aluminium fluoride,
characterised in that the plate is provided with a soldering paste consisting of a flux containing approximately 50 % potassium fluoride and approximately 50 % aluminium fluoride, a soldering powder containing approximately 80 to 90 % aluminium and 20 to 10 % silicon and a binder consisting of a monopropylene glycol and 10 to 30 % by weight of a solution of butyl methacrylate in glycol ether, glycol ester or ketones, individually or as a mixture, the binder content being between 0.2 and 2 % by weight, after which the coated plate is dried and age-hardened.

2. Method for the production of large-area aluminium or aluminium-alloy plates to be fixed to an iron-alloy workpiece, e.g. a highly heat-conductive aluminium plate on the bottom of a stainless steel saucepan, using a powder containing aluminium and silicon and a flux containing potassium fluoride and aluminium fluoride,
characterised in that the plate is provided with a soldering paste consisting of a flux containing approximately 50 % potassium fluoride and approximately 50 % aluminium fluoride, a soldering powder containing approximately 80 to 90 % aluminium and 20 to 10 % silicon and a binder consisting of a monopropylene glycol and 10 to 30 % by weight of a solution of butyl methacrylate in a mixture of aliphatic and naphthenic hydrocarbons (C₇ to C₉), the binder content being between 0.2 and 2 % by weight, after which the coated plate is dried and age-hardened.

3. Method according to claim 2, characterised in that the soldering paste sprayed on to the plate by a spray gun is then fixed in a second operation by spraying on the binder solution.

4. Method according to claim 1, characterised in that up to a maximum of 5.0 % by weight of glycol ether acetates is added to the binder.

5. Method according to one of claims 1 to 4, characterised by a flux content of between 40 and 60 % by weight, a soldering powder content of between 60 and 40 % by weight and/or a binder content of between 0.3 and 1.2 % by weight and/or characterised by a binder containing 20 to 25 % by weight of the solution of butyl methacrylate.

6. Method according to one of claims 1 to 5, characterised in that the monopropylene glycol fraction is added to the soldering paste and/or that the soldering paste is sprayed on to the plate by a spray gun.

7. Soldering paste for carrying out the method for the production of large-area aluminium or aluminium-alloy plates to be fixed to an iron-alloy workpiece according to at least one of the preceding claims, characterised in that the soldering paste consists of a flux containing approximately 50 % potassium fluoride and approximately 50 % aluminium fluoride, a soldering powder containing approximately 80 to 90 % aluminium and 20 to 10 % silicon and a binder which consists of a monopropylene glycol and 10 to 30 % by weight of a solution of butyl methacrylate in glycol ether and/or glycol ester and/or ketones and possibly glycol ether acetates or in a mixture of aliphatic or naphthenic hydrocarbons (C₇ to C₉) and the content of which is between 0.2 and 2 % by weight, preferably 0.3 to 1.2 % by weight.

8. Soldering paste according to claim 7, characterised by a flux content of between 40 and 60 % by weight and/or a soldering powder content of between 60 and 40 % by weight.

9. Soldering paste according to claim 7, characterised in that the binder comprises a butyl methacrylate dissolved in glycol ether and/or glycol ester or a butyl methacrylate dissolved in ketones and/or glycol ether.

10. Soldering paste according to claim 7, characterised in that the binder comprises a butyl methacrylate dissolved in glycol ester and/or ketones.

11. Soldering paste according to claim 7, characterised in that the binder comprises a butyl methacrylate dissolved in glycol ether, glycol ether acetates, glycol ester and ketones.

12. Soldering paste according to one of claims 7 to 11, characterised in that the proportion of the butyl methacrylate solution in the binder is between 20 and 25 % by weight.

13. Use of the method according to at least one of claims 1 to 6 and of the soldering paste according to at least one of claims 7 to 12 for applying a highly heat-conductive aluminium plate to a stainless steel saucepan.

14. Use of the method according to at least one of claims 1 to 6 and of the soldering paste according to at least one of claims 7 to 12 for the production of a transportable aluminium plate for stainless steel saucepans.

## Revendications

1. Procédé de fabrication de grandes plaques ou platines plates en aluminium ou en alliages d'aluminium destinées à être fixées à une pièce façonnée constituée d'un alliage à base de fer, par exemple une plaque en aluminium à bonne conduction thermique au fond d'un ustensile de cuisson, en acier spécial inoxydable, en utilisant une poudre contenant de l'aluminium et du silicium ainsi que d'un flux contenant du fluorure de potassium et d'aluminium,
caractérisé en ce que
la plaque est munie d'une pâte de soudure contenant un flux constitué d'environ 50% de fluorure de potassium et d'environ 50% de fluorure d'aluminium, une poudre de soudure composée d'environ 80 à 90% d'aluminium et de 20 à 10% de silicium ainsi qu'un liant à base d'un monopropylène glycol et de 10 à 30% en poids d'une solution de butylméthacrylate, éthers de glycol, esters de glycol, cétones, respectivement seuls ou en mélanges, où la proportion en liant est comprise entre 0,2 et 2% en poids, puis la platine ainsi revêtue est séchée et soumise au vieillissement de durcissement.

2. Procédé de fabrication de grandes plaques ou platines plates en aluminium ou en alliage d'aluminium destinées à être fixées à une pièce façonnée constituée d'un alliage à base de fer, par exemple une plaque en aluminium à bonne conduction thermique au fond d'un ustensile de cuisson, en acier spécial inoxydable, en utilisant une poudre contenant de l'aluminium et du silicium ainsi qu'un flux contenant du fluorure de potassium et d'aluminium,
caractérisé en ce que
la plaque est munie d'une pâte de soudure contenant un flux constitué de 50% environ de fluorure de potassium et de 50% environ de fluorure d'aluminium, d'une poudre de soudure composée d'environ 80 à 90% d'aluminium et 20 à 10% de silicium ainsi qu'un liant à base d'un monopropylèneglycol et de 10 à 30% en poids d'une solution de butylméthacrylate dans un mélange d'hydrocarbures aliphatiques et naphtaléniques (C₇ à C₉), la proportion en liant étant comprise entre 0,2 et 2% en poids, puis la platine ainsi revêtue est séchée et soumise au vieillissement de durcissement.

3. Procédé selon la revendication 2, caractérisé en ce que la pâte de soudure pulvérisée sur la plaque à l'aide d'un pistolet est ensuite fixée en pulvérisant la solution de liant au cours d'une deuxième étape de traitement.

4. Procédé selon la revendication 1, caractérisé en ce que l'on ajoute au liant des additifs jusqu'à au plus 5% en poids de glycolétheracétates.

5. Procédé selon l'une des revendications 1 à 4, caractérisé par une proportion du flux comprise entre 40 et 60% en poids, de la poudre de soudure comprise entre 60 et 40% en poids et/ou du liant comprise entre 0,3 et 1,2% en poids et/ou caractérisé par un liant avec 20 à 25% en poids de la solution de butylméthacrylate.

6. Procédé selon l'une des revendications 1 à 5, caractérisé en ce que la partie en monopropylèneglycol est mélangée à la pâte de soudure et/ou, en ce que la pâte de soudure est pulvérisée sur la plaque à l'aide d'un pistolet de pulvérisation.

7. Pâte de soudure pour la mise en oeuvre du procédé de fabrication de grandes plaques ou platines plates en aluminium ou en alliages d'aluminium destinées à être fixées à une pièce façonnée constituée d'un alliage à base de fer selon au moins l'une quelconque des revendications précédentes, caractérisée en ce que la pâte de soudure est composée d'un flux contenant environ 50% de fluorure de potassium, et environ 50% de fluorure d'aluminium, d'une poudre de soudure contenant environ 80 à 90% d'aluminium et 20 à 10% de silicium ainsi que d'un liant, qui est constitué d'un monopropylène glycol ainsi que de 10 à 30% en poids d'une solution de butylméthacrylate dans des glycoléthers et/ou des glycolesters et/ou des cétones et le cas échéant d'acétates de glycoléthers ou dans un mélange d'hydrocarbures aliphatiques ou naphténiques (C₇ à C₉) et dont la proportion est comprise entre 0,2 et 2% en poids, de préférence entre 0,3 et 1,2% en poids.

8. Pâte de soudure selon la revendication 7, caractérisée par une proportion du flux comprise entre 40 et 60% en poids et/ou de poudre de soudure entre 60 et 40% en poids.

9. Pâte de soudure selon la revendication 7, caractérisée en ce que le liant comporte du butylméthacrylate dissous dans des glycoléthers et/ou des glycolesters ou du butylméthacrylate dissous dans des cétones et/ou des glycoléthers.

10. Pâte de soudure selon la revendication 7, caractérisée en ce que le liant comporte un butylméthacrylate dissous dans des glycolesters et/ou des cétones.

11. Pâte de soudure selon la revendication 7, caractérisée en ce que le liant comporte un butylméthacrylate dissous dans des glycoléthers, des acétates de glycoléthers, des glycolesters ou des cétones.

12. Pâte de soudure selon l'une des revendications 7 à 11, caractérisée en ce que la proportion de la solution de butylméthacrylate dans le liant est comprise entre 20 et 25% en poids.

13. Application du procédé selon au moins l'une des revendications 1 à 6 ou de la pâte de soudure selon au moins l'une des revendications 7 à 12, pour l'application d'une plaque ou platine d'aluminium à bonne conductivité thermique sur un ustensile de cuisson en acier spécial inoxydable.

14. Application du procédé selon au moins une quelconque des revendications 1 à 6 ou de la pâte de soudure selon au moins une des revendications 7 à 12, pour la fabrication d'une plaque ou platine en aluminium apte à être transportée, pour des ustensiles de cuisson en acier spécial inoxydable.
